(19) Europäisches Patentamt / European Patent Office / Office européen des brevets

(11) **EP 3 992 666 A1**

(12) **DEMANDE DE BREVET EUROPEEN**

(43) Date de publication:
**04.05.2022 Bulletin 2022/18**

(21) Numéro de dépôt: **21204090.1**

(22) Date de dépôt: **22.10.2021**

(51) Classification Internationale des Brevets (IPC):
***G01S 13/72*** *(2006.01)*

(52) Classification Coopérative des Brevets (CPC):
**G01S 13/723**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **29.10.2020 FR 2011076**

(71) Demandeur: **THALES**
**92400 Courbevoie (FR)**

(72) Inventeur: **ATTAL, Yoann**
**78851 ELANCOURT (FR)**

(74) Mandataire: **Marks & Clerk France**
**Immeuble "Visium"**
**22, avenue Aristide Briand**
**94117 Arcueil Cedex (FR)**

(54) **PROCEDE ET SYSTEME D'ESTIMATION DE L'ETAT D'UNE CIBLE MOBILE**

(57) Les modes de réalisation de l'invention fournissent procédé d'estimation de l'état d'une cible mobile (102), destiné à être mis en œuvre dans un radar (101), comprenant une pluralité d'itérations, chacune des itérations comprenant une étape d'application d'un filtre de Kalman étendu invariant et fournissant une estimation de l'état de la cible mobile (102) représenté par une pluralité de paramètres d'état et une matrice d'estimation de la covariance de l'erreur, le filtre comprenant :
- une étape de prédiction fournissant un état estimé a priori de la cible mobile (102) en résolvant un modèle dynamique de mouvement ; et
- une étape de correction fournissant un état estimé a posteriori de la cible mobile (102) en utilisant l'état estimé a priori et une mesure d'au moins un des paramètres d'état.

Avantageusement, le modèle dynamique de mouvement de la cible mobile (102) converge, après un nombre fini d'itérations, vers un mouvement rectiligne.

Figure 1

EP 3 992 666 A1

**Description**

**Art antérieur**

La présente invention concerne un procédé et un système d'estimation de l'état d'une cible mobile.

Les systèmes de suivi de cibles mobiles sont généralement utilisés pour détecter la présence de cibles mobiles et suivre en temps réel l'évolution de l'état d'une cible mobile détectée. Un état de cible mobile peut comprendre sa position instantanée dans un référentiel donné, ainsi que sa vitesse de déplacement et son accélération.

Des systèmes de suivi de cibles existants sont, par exemple, déployés dans les aéroports afin de contrôler le trafic aérien en supervisant le décollage et l'atterrissage des aéronefs. Ils permettent également de détecter l'intrusion d'objets susceptibles de perturber le trafic aérien, tels qu'un drone.

Certains systèmes de suivi de cibles mobiles connus sont en outre pourvus d'une fonction de téléguidage permettant de fournir la localisation instantanée d'un objet mobile et de guider à distance l'objet localisé au moyen de signaux radiofréquences.

Les systèmes de suivi décrits ci-dessus comprennent généralement un ou plusieurs radars équipés de moyens de détection et de suivi en temps réel de cibles mobiles. De tels radars peuvent être classés selon plusieurs critères tels que la mobilité, la bande de fréquences des signaux manipulés, le mode de fonctionnement, etc. Un radar peut fonctionner selon un mode de fonctionnement actif dans lequel il émet des signaux en direction de la cible mobile et analyse les signaux rétrodiffusés, et/ou fonctionner selon un mode de fonctionnement passif dans lequel le radar analyse seulement les signaux délibérément émis par la cible mobile. Un radar comprend généralement de différents composants nécessaires à la manipulation des signaux utilisés par le radar en fonction de son mode de fonctionnement. Un radar met en outre en œuvre différents procédés de traitement des signaux reçus pour déterminer un état d'une cible mobile d'intérêt.

Les systèmes de suivi de cibles mobiles existants reposent généralement sur un modèle dynamique de mouvement régissant le mouvement de la cible mobile considérée et un procédé de filtrage mis en œuvre pour estimer l'état de la cible mobile.

La précision de l'estimation de l'état d'une cible fournie par un système d'estimation et la complexité de calcul nécessaire à l'estimation dépendent essentiellement du modèle dynamique de mouvement élaboré pour décrire le mouvement de la cible mobile. Un tel modèle dynamique de mouvement est d'autant plus précis qu'il est capable de décrire les différents mouvements que la cible mobile est susceptible d'entreprendre. Un tel modèle dynamique de mouvement peut être linéaire, auquel cas chaque paramètre d'état de la cible mobile décrivant un état actuel relativement à l'instant courant peut être exprimé sous forme d'une combinaison linéaire comprenant un ou plusieurs paramètres d'état décrivant un état précédent par rapport à un instant précédent. Généralement, une fonction d'état est utilisée pour lier les paramètres d'état de l'instant courant aux paramètres d'état d'un instant précédent. Par ailleurs, le procédé de filtrage s'appuie classiquement sur un filtre de Kalman non-étendu qui repose sur l'utilisation d'un tel modèle dynamique de mouvement linéaire. Le filtre de Kalman non-étendu présente plusieurs avantages parmi lesquels :

- une complexité de calcul réduite et des ressources en mémoire limitées (un historique des estimations et des mesures n'est pas requis), et

- une compatibilité avec de nombreuses applications (vision électronique, trafic routier, météorologie, etc.).

Cependant, les cibles mobiles sont de plus en plus manœuvrantes et leurs paramètres d'état par rapport à l'instant courant peuvent être des combinaisons non-linéaires des paramètres d'état par rapport à un instant précédent. De manière similaire, la fonction de mesure liant l'état de la cible à la mesure acquise par un observateur peut aussi être non-linéaire.

Il existe aussi une version étendue du filtre de Kalman, encore appelé EKF (Extended Kalman Filter), dans laquelle la fonction d'état et la fonction de mesure sont linéarisées autour d'un état donné en utilisant respectivement les dérivées partielles de la fonction d'état et les dérivées partielles de la fonction de mesure. Un filtre de Kalman étendu présente des performances améliorées. Cependant, il présente une complexité de calcul non optimale due aux opérations de linéarisation requises à chaque itération et aux risques de divergences de l'algorithme de filtrage qui peuvent être initiées par des petites erreurs d'estimation.

Dans [Marion Pilté, Silvère Bonnabel, and Frédéric Barbaresco, Invariant Extended Kalman Filter for Target Tracking, URSI France 2018], il a été proposé une nouvelle version IEKF du filtre de Kalman (IEKF est l'acronyme pour « Invariant Extended Kalman Filter » signifiant « Filtre de Kalman étendu Invariant ») pour réduire la complexité de calcul caractérisant la version étendue du filtre de Kalman. La version étendue invariante du filtre de Kalman, IEKF, exploite des transformations telles que des rotations et/ou des translations laissant un système à estimer invariant au cours du temps pour réduire la complexité de calcul. Des équations d'évolution d'un filtre de Kalman IEKF expriment le fait que, pour une cible mobile évoluant dans un espace à trois dimensions (3D), un paramètre de courbure et un paramètre de torsion régissant son mouvement sont, à un bruit additif près, constants au cours du temps. D'un point de vue géométrique, ces équations d'évolution privilégient alors un mouvement hélicoïdal, ce qui peut nuire aux performances d'un filtre de Kalman de type IEKF. En effet, lorsqu'une cible mobile suit un mouvement rectiligne, ce filtre risque d'estimer une trajectoire en hélice tournoyant autour de la ligne droite réelle. Ainsi, ces équations d'évolution ne permettent en l'état pas de distinguer d'une part une hélice de rayon infime et parcourue à très grande vitesse, d'une ligne droite d'autre part. De manière similaire, dans le cas d'un suivi d'une cible mobile évoluant dans un plan à deux dimensions (2D), un paramètre de courbure constant au cours du temps conduit à faire l'hypothèse que la trajectoire « de croisière » d'une cible est un cercle. Ainsi, si une cible suit un mouvement rectiligne, le filtre peut estimer une trajectoire constituée d'une multitude de petits cercles dont le centre suit la ligne droite réelle. En deux (2D) comme en trois dimensions (3D), ces équations d'évolution ont alors le défaut de privilégier des trajectoires tournoyantes quand une trajectoire rectiligne se présente, ce qui nuit aux performances du filtre, notamment en ce qui concerne l'estimation du vecteur vitesse de la cible mobile suivie. Dans certains cas, cela peut aller jusqu'à faire diverger le filtre.

Par ailleurs, le mouvement d'une cible mobile dans un espace à trois dimensions (3D) muni d'un repère donné s'effectue dans un plan horizontal associé à une altitude constante durant la plupart du temps de vol, comme par exemple, pour des avions de ligne assurant des longs trajets. Une telle caractéristique n'est pas prise en compte par les équations d'évolution d'un filtre de Kalman de type IEKF qui expriment un changement continu dans le temps de l'altitude d'une cible mobile. De telles caractéristiques des équations d'évolution d'un filtre de Kalman de type IEKF dégradent les performances en termes de précision et de stabilité.

Il existe donc un besoin d'un procédé et d'un système d'estimation de l'état d'une cible mobile capables d'améliorer les performances en termes de précision et de stabilité, sans impacter la complexité de calcul.

**Définition générale de l'invention**

A cet effet la présente invention fournit un procédé d'estimation de l'état d'une cible mobile, destiné à être mis en œuvre dans un radar, comprenant une pluralité d'itérations, chacune des itérations comprenant une étape d'application d'un filtre de Kalman étendu invariant et fournissant une estimation de l'état de la cible mobile représenté par une pluralité de paramètres d'état et une matrice d'estimation de la covariance de l'erreur, le filtre de Kalman étendu invariant comprenant :

- une étape de prédiction fournissant un état estimé a priori de la cible mobile en résolvant un modèle dynamique de mouvement ; et

- une étape de correction fournissant un état estimé a posteriori de la cible mobile en utilisant l'état estimé a priori et une mesure d'au moins un des paramètres d'état.

Avantageusement, le modèle dynamique de mouvement de la cible mobile peut converger, après un nombre fini d'itérations, vers un mouvement rectiligne.

Dans un mode de réalisation, le modèle dynamique de mouvement peut converger, après un nombre fini d'itérations, vers un mouvement rectiligne uniforme.

Dans un autre mode de réalisation, le modèle dynamique de mouvement peut converger, après un nombre fini d'itérations, vers un mouvement dans un plan horizontal associé à une altitude constante par rapport au sol.

Avantageusement, la cible mobile peut se déplacer dans un espace à trois dimensions (3D), la pluralité de paramètres d'état peut comprendre :

- une matrice d'orientation ;

- un paramètre de courbure ;

- un paramètre de torsion ;

- une norme de vecteur vitesse ; et

- une position instantanée.

En variante, l'évolution temporelle du paramètre de courbure et l'évolution temporelle du paramètre de torsion peuvent suivre une loi exponentielle décroissante impactée par un bruit additif.

Avantageusement, la cible mobile peut se déplacer dans un plan à deux dimensions (2D), la pluralité de paramètres d'état peut comprendre :

- un angle définissant le cap de la cible mobile ;

- un paramètre de courbure ;

- une norme de vecteur vitesse ; et

- une position instantanée.

Dans un mode de réalisation, le radar peut opérer selon un mode de fonctionnement actif, une mesure active acquise par le radar permettant de déterminer un ou plusieurs des paramètres de position suivants :

- la distance séparant le radar de la cible mobile ;

- la vitesse relative du mouvement de la cible mobile par rapport au radar ; et

- la direction de la cible mobile définie par un angle d'élévation et un angle d'azimut.

Dans un autre mode de réalisation, le radar peut opérer selon un mode de fonctionnement passif, une mesure passive acquise par le radar permettant de déterminer au moins la direction de la cible mobile définie par un angle d'élévation et un angle d'azimut.

Avantageusement, le radar peut alterner son fonctionnement entre un mode de fonctionnement actif et un mode de fonctionnement passif.

En variante, le radar peut être fixe par rapport au sol.

Dans un mode de réalisation, le radar peut être mobile par rapport au sol, chacune des itérations comprenant une étape de mise à jour des paramètres d'état comprenant les sous-étapes consistant à :

- recevoir la pluralité de paramètres d'état déterminés lors d'une itération précédente ;

- définir un nouveau repère de mesure associé à la position instantanée du radar ;

- redéfinir la pluralité de paramètres d'état reçus dans le nouveau repère de mesure.

Il est en outre proposé un système d'estimation de l'état d'une cible mobile, pouvant comprendre un dispositif d'estimation configuré pour mettre en œuvre le procédé d'estimation de l'état d'une cible mobile précédemment décrit.

**Brève description des figures**

D'autres caractéristiques et avantages de l'invention apparaîtront à l'aide de la description qui suit et des figures dans lesquels :

La figure 1 représente un système d'estimation dans lequel un procédé d'estimation de l'état d'une cible mobile peut être mis en œuvre, selon des modes de réalisation de l'invention ;

La figure 2 illustre des paramètres d'état d'une cible mobile se déplaçant dans un espace 3D ;

La figure 3 représente un procédé d'estimation de l'état d'une cible mobile, selon un mode de réalisation de l'invention ;

La figure 4 représente un procédé d'estimation de l'état d'une cible mobile, selon un autre mode de réalisation de l'invention ; et

La figure 5 représente un dispositif d'estimation de l'état d'une cible mobile, selon des modes de réalisation de l'invention.

**Description détaillée**

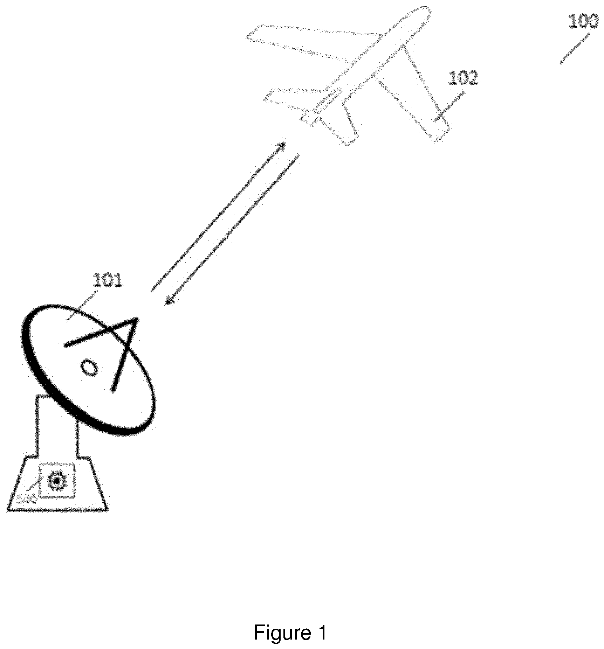

La figure 1 représente un système d'estimation 100 comprenant un dispositif d'estimation 500 de l'état d'une cible mobile 102, selon des modes de réalisation de l'invention. Le système d'estimation 100 comprend en outre un radar 101.

Le radar 101 peut être configuré pour fonctionner selon un mode de fonctionnement actif dans lequel il émet des signaux électromagnétiques en direction de la cible mobile 102 et analyse les signaux rétrodiffusés par la cible mobile 102. Un mode de fonctionnement actif présente l'avantage de permettre un suivi continu dans le temps de la cible mobile 102 et permet au radar 101 d'acquérir des mesures actives. De telles mesures actives peuvent être utilisées pour déterminer un ou plusieurs paramètres de position relatifs au mouvement de la cible mobile 102, tels que par exemple la distance qui sépare le radar 101 de la cible mobile 102, la vitesse selon laquelle la cible mobile 102 se déplace par rapport au radar 101, et les angles d'azimut et d'élévation définissant la direction dans laquelle se situe la cible mobile 102.

Alternativement, le radar 101 peut être configuré pour fonctionner selon un mode de fonctionnement passif dans lequel il n'émet aucun signal en direction de la cible mobile 102 et analyse les signaux délibérément émis par la cible mobile 102. Une mesure passive acquise par le radar 101, selon un tel mode de fonctionnement passif, permet de déterminer un nombre limité de paramètres de position relatifs au mouvement de la cible mobile 102, tels que par exemple les angles d'azimut et d'élévation. Un mode de fonctionnement passif présente l'avantage de permettre une discrétion du suivi et de réduire la complexité matérielle dans le radar 101 qui peut être muni d'une chaîne de réception et d'analyse de signaux reçus.

Dans un autre mode de réalisation de l'invention, le radar 101 peut être configuré pour fonctionner alternativement en mode de fonctionnement actif et en mode de fonctionnement passif, de manière régulière ou non régulière dans le temps ou en fonction de la détection de conditions déclenchant un basculement du mode actif au mode passif (ou vice versa). Par exemple, des mesures passives peuvent être acquises toutes les une ou deux secondes tandis qu'une mesure active peut être effectuée chaque minute.

Dans des modes de réalisation de l'invention, le radar 101 est fixe par rapport au sol et sa localisation est supposée connue avec exactitude dans un référentiel terrestre, par exemple.

Dans d'autres modes de réalisation de l'invention, le radar 101 peut être mobile par rapport au sol. Dans ce cas, le radar 101 peut être équipé de moyens de localisation permettant de déterminer avec exactitude la position instantanée du radar 101. De tels moyens de localisation peuvent comprendre à titre d'exemple une centrale inertielle.

La cible mobile 102 peut être tout objet évoluant dans un espace à trois dimensions (3D). Des exemples de cibles mobiles 102 incluent par exemple et sans limitation un aéronef, un drone ou une fusée. La cible mobile 102 peut aussi être tout objet évoluant de manière continue dans le temps dans un plan à deux dimensions (2D), tel qu'un véhicule terrestre ou un bâtiment de surface. En outre, l'état d'une cible mobile 102 peut être décrit par un ou plusieurs paramètres d'état tels que la position instantanée et la vitesse de déplacement.

L'estimation de l'état d'une cible mobile 102 repose généralement sur un modèle dynamique de mouvement régissant le mouvement de la cible mobile 102 et sur un algorithme de filtrage capable d'estimer l'état de la cible mobile 102 considérée à partir des mesures actives et/ou passives acquises. Un modèle dynamique de mouvement est généralement élaboré au moyen d'une ou de plusieurs fonction d'état, appelées aussi équations d'évolution, permettant de lier l'état précédent de la cible mobile 102 auquel un instant précédent est associé à l'état actuel de la cible mobile 102 associé à l'instant actuel en prenant en considération une entrée de commande et/ou un premier paramètre de bruit, dit bruit d'état.

En outre, l'estimation de l'état d'une cible mobile 102 utilise des fonctions de mesure, appelées aussi équations d'observation, permettant de lier l'état actuel de la cible mobile 102, associé à l'instant actuel, à la mesure acquise relativement au même instant temporel en prenant en considération un deuxième paramètre de bruit, dit bruit de mesure.

Par ailleurs, l'algorithme de filtrage est généralement exécuté de manière récursive de manière à fournir à chaque itération une estimation de l'état de la cible mobile 102 et à utiliser l'état estimé comme entrée pour la prochaine itération de l'algorithme de filtrage. Chacune des itérations de l'algorithme de filtrage comprend généralement deux étapes :

- une étape de prédiction fournissant un état de la cible mobile 102 estimé a priori, dit aussi état prédit, en résolvant les équations d'évolution du modèle dynamique de mouvement. L'étape de prédiction peut en outre fournir une matrice d'estimation a priori de la covariance de l'erreur ; et
- une étape de correction recevant une mesure de l'état de la cible mobile 102, généralement incomplète et/ou corrompue du bruit, pour fournir un état estimé à posteriori en combinant l'état estimé à priori et la mesure reçue selon des coefficients de pondération donnés. L'étape de correction peut en outre fournir une matrice d'estimation a posteriori de la covariance de l'erreur.

Qu'il s'agisse d'un état estimé a priori ou un état estimé a posteriori, la matrice d'estimation de la covariance de l'erreur associée à l'état estimé permet de quantifier le degré de confiance à attribuer à un état estimé de la cible mobile 102. L'aspect récursif de l'algorithme de filtrage permet de minimiser la matrice d'estimation de la covariance de l'erreur en passant d'une itération à une autre itération.

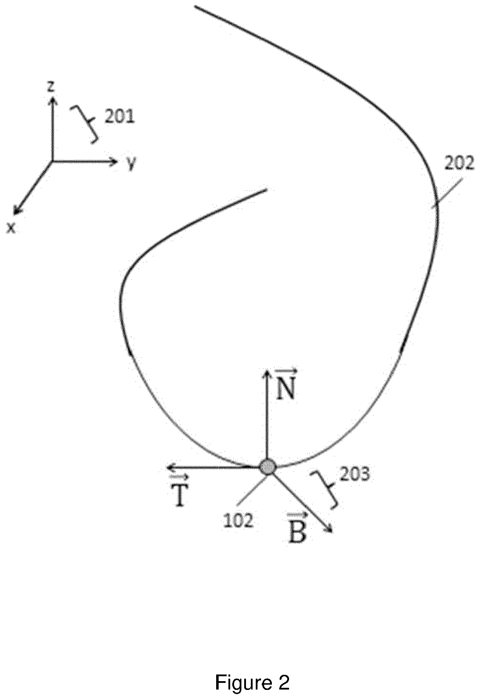

La figure 2 illustre le mouvement d'une cible mobile 102 dans un espace 3D muni d'un repère orthonormé 201, appelé aussi repère de mesure 201. Le repère orthonormé 201 peut être fixe au cours du temps, l'origine d'un tel repère orthonormé peut correspondre à la position du radar 101 lorsque celui-ci est fixe. Le mouvement de la cible mobile 102 peut être décrit à l'aide d'une pluralité de paramètres d'état comprenant une matrice d'orientation R définissant un repère auxiliaire dont le centre est défini par la position instantanée de la cible mobile 102 et dont les vecteurs de base constituent un trièdre Frenet-Serret 203. Les vecteurs de base du trièdre sont unitaires, orthogonaux deux à deux et comprennent :

- un vecteur tangent $\vec{T}$ à la trajectoire 202 de la cible mobile 102 et colinéaire avec son vecteur vitesse, le mouvement de la cible mobile 102 étant supposé s'effectuer sans glissement ;

- un vecteur normal $\vec{N}$ orienté vers le centre de la courbure locale de la trajectoire 202, le couple $(\vec{T},\vec{N})$ formant un plan appelé plan osculateur à la courbe ; et

- un vecteur binomial $\vec{B}$ complète le trièdre de manière que le triplet $(\vec{T},\vec{N},\vec{B})$ forme une base orthonormée.

Les paramètres d'état décrivant le mouvement de la cible mobile 102 peuvent en outre comprendre un paramètre de courbure $\gamma$ et un paramètre de torsion $\tau$. Alors que le paramètre de courbure $\gamma$ mesure la tendance à s'écarter de la tangente, le paramètre de torsion $\tau$ mesure la tendance à s'écarter du plan osculateur. Les paramètres de courbure $\gamma$ et de torsion $\tau$ régissent l'évolution au cours du temps des vecteurs formant le trièdre Frenet-Serret 203 selon la relation (1) :

$$\frac{d\vec{T}}{dt} = \gamma\vec{N};\ \frac{d\vec{N}}{dt} = -\gamma\vec{T} + \tau\vec{B};\ \frac{d\vec{B}}{dt} = -\tau\vec{N} \qquad (1)$$

Le mouvement de la cible mobile 102 peut en outre être décrit par les coordonnées cartésiennes x de la position instantanée de la cible mobile 102 telle que définie dans le repère de mesure 201 et par la norme du vecteur vitesse u de la cible mobile 102.

Les paramètres d'état de la cible mobile 102 peuvent être classés en deux groupes de paramètres d'état. Le premier groupe de paramètres d'état peut comprendre la matrice d'orientation R et la position instantanée x de la cible mobile 102 et peut être représenté sous une forme matricielle selon la relation (2) :

$$\chi = \begin{pmatrix} R & x \\ 0_{1,3} & 1 \end{pmatrix} \qquad (2)$$

Le deuxième groupe de paramètres d'état peut comprendre le paramètre de courbure $\gamma$, le paramètre de torsion $\tau$ et la norme du vecteur vitesse u. Le deuxième groupe de paramètres d'état peut être représenté sous un format vectoriel selon la relation (3) :

$$\zeta = \begin{pmatrix} \gamma \\ \tau \\ u \end{pmatrix} \qquad (3)$$

Dans un premier mode de réalisation préféré de l'invention, les équations d'évolution des paramètres de courbure et de torsion peuvent être modifiées, à la différence des solutions de l'état de la technique dans lesquelles les paramètres de courbure et de torsion restent constants au cours du temps (à un bruit additif près). Dans un tel mode de réalisation, l'évolution temporelle de chacun des paramètres de courbure et de torsion obéit à une équation différentielle linéaire de premier ordre à coefficients constants et dont le second membre est représenté par un bruit blanc additif. Ainsi, les paramètres de courbure et de torsion suivent une loi exponentielle décroissante impactée par un bruit blanc additif.

Les équations d'évolution des paramètres de courbure et de torsion peuvent ainsi s'écrire sous les formes données par les relations (4) et (5) :

$$\frac{d\gamma}{dt} = -\frac{\gamma}{t_\gamma} + w_\gamma \qquad (4)$$

$$\frac{d\tau}{dt} = -\frac{\tau}{t_\tau} + w_\tau \qquad (5)$$

Les coefficients $t_\gamma$ et $t_\tau$ sont des temps caractéristiques préalablement définis. Les paramètres $w_\gamma$ et $w_\tau$ représentent des bruits qui peuvent être gaussiens, centrés, et de variances respectives $\sigma_\gamma$ et $\sigma_\tau$. Les équations d'évolution (4) et (5) permettent aux paramètres de courbure et de torsion de converger vers zéro ce qui correspond à un mouvement rectiligne de la cible mobile 102.

Avantageusement, le mouvement de la cible mobile 102 peut en outre être considéré rectiligne uniforme en gardant la même équation d'évolution de la norme du vecteur vitesse u par rapport aux solutions de l'état de la technique. Une telle équation d'évolution peut être donnée par la relation (6) :

$$\frac{du}{dt} = 0 + w_u \quad (6)$$

Dans la relation (6), $w_u$ représente un bruit additif qui peut être centré de variance $\sigma_u$.

L'évolution au cours du temps de la matrice d'orientation R et de la position instantanée x de la cible mobile 102 peuvent obéir aux modèles dynamiques décrits dans l'état de la technique selon la relation (7) :

$$\frac{dx}{dt} = Rv + w_x; \frac{dR}{dt} = R(\omega + w_\omega)_\times \quad (7)$$

Dans la relation (7) :

- $(a)_\times$ de $R^{3\times3}$ désigne la matrice antisymétrique associée au vecteur a de $R^3$ de sorte que pour un vecteur b de

$$\mathbb{R}^3 : (a)_\times b = a \wedge b \;;$$

- $v = (u,0,0)^T$;

- $\omega = \begin{pmatrix} \tau \\ 0 \\ \gamma \end{pmatrix}$ ; et

- Chacun des éléments $w_x$, $w_\omega$ représente un bruit blanc additif gaussien.

Dans d'autres modes de réalisation de l'invention, la cible mobile 102 peut se déplacer dans un plan à deux dimensions (2D). Dans de tels modes de réalisation, l'état de la cible mobile 102 peut être décrit par plusieurs paramètres d'état comprenant les cordonnées cartésiennes x de la cible mobile 102 en 2D, un paramètre courbure $\gamma$, le cap de la cible mobile 102 $\theta$, la vitesse de changement de cap $\frac{d\theta}{dt}$ et la norme du vecteur vitesse u. Les paramètres d'état de la cible mobile 102 peuvent être représentés par un vecteur d'état ayant les composantes suivantes : x, $\gamma$, $\theta$, $\frac{d\theta}{dt}$, u. De tels paramètres d'état peuvent obéir à des équations d'évolution similaires aux équations (4) à (7).

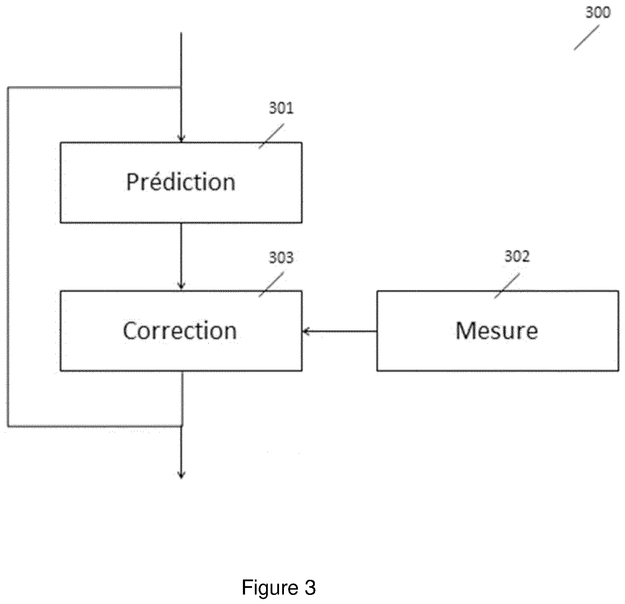

La figure 3 représente un procédé d'estimation de l'état d'une cible mobile 102 selon un mode de réalisation de l'invention. Le procédé d'estimation comprend une pluralité d'itérations, chacune des itérations comprenant une étape d'application d'un filtre de Kalman étendu invariant (IEKF) et fournissant une estimation de l'état de la cible mobile 102. L'application d'un filtre de Kalman étendu invariant comprend :

- une étape de prédiction 301 fournissant un état estimé a priori de la cible mobile 102 en résolvant une ou plusieurs des équations d'évolution représentant un des modèles dynamiques de mouvement décrits ci-dessus ; et

- une étape de correction 303 fournissant un état estimé a posteriori de la cible mobile 102 en utilisant l'état estimé a priori et une mesure d'au moins un des paramètres d'état.

La suite de la description sera faite en référence à un système à temps discret dans lequel la k-ème itération du procédé est associée à l'instant courant $t_k$ et des paramètres d'état estimés a posteriori lors de l'itération précédente (k-1) et la matrice d'estimation de la covariance de l'erreur associée sont utilisés, à titre d'illustration. L'intervalle du temps séparant deux itérations successives du procédé d'estimation peut être fixe ou variable. Par ailleurs, à la première itération du procédé d'estimation, des paramètres d'état initiaux et une matrice d'estimation de la covariance de l'erreur associée sont reçus.

L'étape 301 de la k-ième itération du procédé consiste à mettre en œuvre une prédiction selon un filtre de Kalman étendu invariant consistant à déterminer un état estimé a priori en résolvant les équations d'évolution des paramètres d'état (4) à (7). Les paramètres d'état représentés par X peuvent être estimés a priori en résolvant l'équation (8) :

$$\frac{d\hat{\chi}}{dt} = \hat{\chi}\hat{v} \qquad (8)$$

Dans l'équation (8), v désigne une matrice carrée d'ordre quatre définie par les paramètres d'état de la cible mobile 102 représentés par $\zeta$ selon la relation (9) :

$$v = \begin{pmatrix} 0 & -\gamma & 0 & u \\ \gamma & 0 & -\tau & 0 \\ 0 & \tau & 0 & 0 \\ 0 & 0 & 0 & 0 \end{pmatrix} \qquad (9)$$

En outre, les paramètres d'état représentés par $\zeta$ peuvent être estimés a priori en résolvant l'équation (10) :

$$\frac{d\hat{\zeta}}{dt} = \begin{pmatrix} -\dfrac{\hat{\gamma}}{t_\gamma} \\ -\dfrac{\hat{\tau}}{t_\tau} \\ 0 \end{pmatrix} \qquad (10)$$

La matrice d'estimation a priori de la covariance de l'erreur peut être déterminée en résolvant l'équation de Riccati donnée par relation (11) :

$$\frac{dP}{dt} = AP + PA^T + Q \qquad (11)$$

Dans la relation (11), Q désigne une matrice de covariance du bruit du processus et A désigne une matrice d'évolution donnée par la relation (12) :

$$A = \begin{pmatrix} -\begin{pmatrix}\hat{\tau}\\0\\\hat{\gamma}\end{pmatrix}_\times & 0_{3,3} & \begin{matrix}0 & 1 & 0\\0 & 0 & 0\\1 & 0 & 0\end{matrix} \\ -\begin{pmatrix}\hat{u}\\0\\0\end{pmatrix}_\times & -\begin{pmatrix}\hat{\tau}\\0\\\hat{\gamma}\end{pmatrix}_\times & \begin{matrix}0 & 0 & 1\\0 & 0 & 0\\0 & 0 & 0\end{matrix} \\ 0_{3,3} & 0_{3,3} & \begin{matrix}-\frac{1}{t_\gamma} & 0 & 0\\ 0 & -\frac{1}{t_\tau} & 0\\ 0 & 0 & 0\end{matrix} \end{pmatrix} \quad (12)$$

L'étape 302 de la k-ième itération du procédé consiste à mettre en œuvre une mesure consistant à acquérir une mesure Y d'un ou de plusieurs paramètres d'état de la cible mobile 102. Le paramètre d'état mesuré peut être la position instantanée x de la cible mobile 102. Dans un mode de fonctionnement passif du radar 101, la position instantanée x peut être déduite à partir des angles d'azimut et d'élévation en utilisant une ou plusieurs techniques de localisation. De telles techniques de localisation peuvent comprendre par exemple une analyse de l'angle d'arrivée du signal et/ou une analyse de la puissance du signal reçu. Dans un mode de fonctionnement actif du radar 101, la position instantanée x peut directement être déduite à partir de la distance séparant le radar 101 de la cible mobile 102 et des angles d'azimut et d'élévation déterminés.

L'étape 303 de la k-ième itération du procédé consiste à mettre en œuvre une correction selon le filtre de Kalman étendu invariant. L'étape de correction peut comprendre :

- une détermination d'un paramètre d'erreur ;

- un calcul du gain du filtre de Kalman étendu invariant ;

- un calcul de l'état de la cible mobile 102 estimé a posteriori ; et

- un calcul de la matrice d'estimation a posteriori de la covariance de l'erreur.

Le paramètre d'erreur représente la différence entre un paramètre d'état mesuré Y et le paramètre d'état correspondant tel que prédit lors de l'étape de prédiction 302 qui peut être la position instantanée x. Le paramètre d'erreur peut être donné par la relation (13) :

$$z = \hat{R}(Y - \hat{x}) \quad (13)$$

Le gain du filtre de Kalman est utilisé pour pondérer la contribution de l'état estimé a priori de la cible mobile 102 et la contribution de la mesure effectuée dans le calcul de l'état estimé a posteriori de la cible mobile 102. Le gain du filtre de Kalman peut être donné par la relation (14) :

$$L = PH^T(HPH^T + \hat{R}N\hat{R}^T)^{-1} \quad (14)$$

Dans la relation (14), la matrice N désigne la matrice de covariance du bruit de mesure et H est une matrice donnée par : H = $(0_{3,3} \; I_3 \; 0_{3,3})$.

L'état de la cible mobile 102 estimé à posteriori peut ensuite être déterminé selon la relation (15) :

$$\widehat{\chi^+} = \hat{\chi}\exp((Lz)_{1:6}), \; \widehat{\zeta^+} = \hat{\zeta} + (Lz)_{7:9} \quad (15)$$

La matrice d'estimation a posteriori de la covariance de l'erreur peut ensuite être calculée en utilisant la relation (16) :

$$\widehat{P^+} = (I_9 - LH)P \qquad (16)$$

Un tel mode de réalisation de l'invention permet la stabilisation de l'estimation en corrigeant, par exemple, le risque de trajectoires hélicoïdales (ou sinusoïdales pour une cible mobile 102 se déplaçant dans un plan 2D) en permettant la convergence du mouvement de la cible mobile 102, après un nombre fini d'itération, vers un mouvement rectiligne pouvant être uniforme. Une telle amélioration est particulièrement utile lorsque le radar 101 opère dans un mode de fonctionnement passif qui ne fournit aucune mesure de la distance séparant le radar 101 de la cible mobile 102.

Dans un deuxième mode de réalisation préféré de l'invention, l'équation d'évolution de la matrice d'orientation peut en outre être modifiée par rapport aux solutions de l'état de la technique pour correspondre, après un nombre fini d'itérations, à un mouvement de la cible mobile 102 dans un plan horizontal associé à une altitude constante par rapport au sol. L'équation d'évolution de la matrice d'orientation peut selon ce mode de réalisation être écrite sous la forme de la relation (17) :

$$\frac{dR}{dt} = R \begin{pmatrix} (1 - \lambda_h)\tau - \lambda_h \frac{u_N}{u_B t_h} \\ \lambda_h \frac{u_T}{u_B t_h} \\ \gamma \end{pmatrix}_\times \qquad (17)$$

Dans la relation (17), les éléments ($u_T$, $u_N$, $u_B$) représentent les coordonnées du vecteur unitaire orienté vers le haut local de la trajectoire 202 de la cible mobile 102 telles que exprimées dans la base ($\vec{T},\vec{N},\vec{B}$). Le paramètre $t_h$ est préalablement prédéfini pour quantifier la vitesse de convergence vers un mouvement horizontal. Le paramètre $\lambda_h$ est une constante comprise entre 0 et 1 et est préalablement prédéfinie pour pondérer le choix entre le respect des équations de Frenet telles que connues dans l'état de l'art et la convergence vers un mouvement horizontal associé à une altitude constante par rapport au sol, selon le deuxième mode de réalisation préféré de l'invention.

Le procédé d'estimation de l'état d'une cible mobile 102 selon ce deuxième mode de réalisation préféré est similaire à celui de la figure 3. Cependant, il utilise une définition différente :

- de l'équation d'évolution de la matrice d'orientation ; et

- de la matrice d'évolution A.

Selon le deuxième mode de réalisation préféré, la matrice d'évolution A s'écrit selon la relation (18) :

$$A = \begin{pmatrix} -\begin{pmatrix} (1-\lambda_h)\hat{\tau} - \lambda_h\frac{\hat{u}_N}{\hat{u}_B t_h} \\ \lambda_h\frac{\hat{u}_T}{\hat{u}_B t_h} \\ \hat{\gamma} \end{pmatrix}_\times & 0_{3,3} & \begin{matrix} 0 & 1 & 0 \\ 0 & 0 & 0 \\ 1 & 0 & 0 \end{matrix} \\ -\begin{pmatrix} \hat{u} \\ 0 \\ 0 \end{pmatrix}_\times & -\begin{pmatrix} (1-\lambda_h)\hat{\tau} - \lambda_h\frac{\hat{u}_N}{\hat{u}_B t_h} \\ \lambda_h\frac{\hat{u}_T}{\hat{u}_B t_h} \\ \hat{\gamma} \end{pmatrix}_\times & \begin{matrix} 0 & 0 & 1 \\ 0 & 0 & 0 \\ 0 & 0 & 0 \end{matrix} \\ 0_{3,3} & 0_{3,3} & \begin{matrix} -\frac{1}{t_\gamma} & 0 & 0 \\ 0 & -\frac{1}{t_\tau} & 0 \\ 0 & 0 & 0 \end{matrix} \end{pmatrix} \qquad (18)$$

Dans la relation (18), les composantes ($\hat{u}_T,\hat{u}_N,\hat{u}_B$) sont estimées à partir de l'estimation de la position instantanée x en effectuant un calcul sur le géoïde terrestre qui permet de déterminer l'estimation de l'orientation locale du trièdre

$(\vec{e}, \vec{n}, \vec{u})$ et donc des composantes $(\hat{u}_T, \hat{u}_N, \hat{u}_B)$ du vecteur $\vec{u}$ dans la base $(\hat{T}, \hat{N}, \hat{B})$.

Dans un autre mode de réalisation de l'invention, le procédé d'estimation de l'état d'une cible mobile 102 peut être mis en œuvre dans un radar mobile 101 par rapport au sol. Le radar 101 peut être porté par un aéronef évoluant dans un espace à trois dimensions (3D) ou être porté par un bâtiment de surface se déplaçant dans un plan à deux dimensions (2D). Le radar mobile 101 peut être configuré pour alterner son fonctionnement entre un mode de fonctionnement actif et un mode de fonctionnement passif ou être configuré pour fonctionner exclusivement selon l'un des deux modes de fonctionnement.

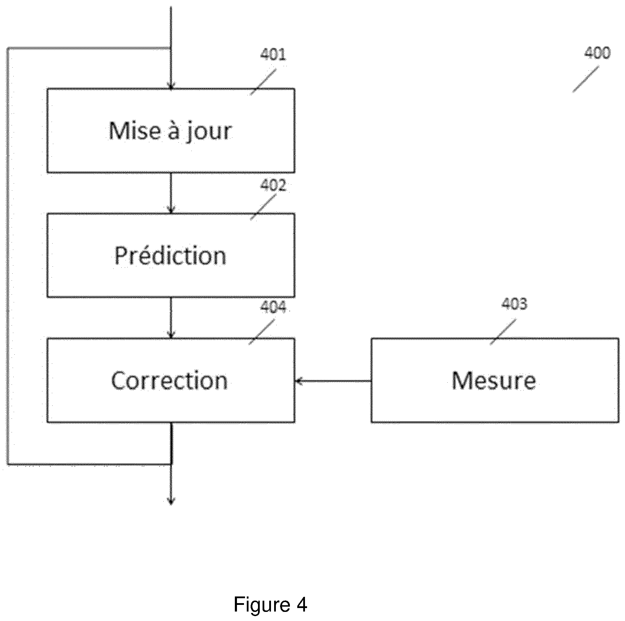

La figure 4 représente un procédé d'estimation de l'état d'une cible mobile 102 destiné à être mis en œuvre dans un radar mobile 101. A l'étape 401, les paramètres d'état et la matrice d'estimation de la covariance de l'erreur associée déterminés à l'itération précédente sont reçus ou extraits de moyens de mémoire. Par ailleurs, la première itération du procédé utilise des paramètres d'état et une matrice d'estimation de la covariance de l'erreur associée initiaux.

A l'étape 401, il est en outre défini un nouveau repère de mesure 201 associé à la position du radar mobile 101 relativement à l'instant temporel de l'exécution de l'itération en cours. Le nouveau repère de mesure 201 peut avoir comme origine la position instantanée du radar mobile 101 et peut être muni d'une base orthonormée dont les axes sont orientés respectivement vers l'Est, le Nord et le Haut. Le changement du repère de mesure 201 peut s'effectuer à chaque itération selon la demande de brevet [FR1911227] en faisant intervenir une matrice de changement de base définie par la relation (19) :

$$M_{k-1}^k = \begin{pmatrix} e_x & n_x & u_x \\ e_y & n_y & u_y \\ e_z & n_z & u_z \end{pmatrix} \quad (19)$$

Les éléments $e_x$, $e_y$, $e_z$, $n_x$, $n_y$, $n_z$, $u_x$, $u_y$ et $u_z$ peuvent être des nombres réels, leur valeur pouvant changer d'une itération à une autre itération. Par ailleurs, les paramètres d'état concernés par le changement du repère de mesure 201 peuvent comprendre les paramètres suivants :

- La matrice d'orientation ;

- La position instantanée de la cible mobile 102 ; et

- La norme de la vitesse de la cible mobile 102.

Une matrice d'orientation déterminée à l'itération précédente (k-1) peut être redéfinie dans le nouveau repère de mesure 201 selon la relation (20) :

$$\left(\widehat{R}_{k-1|k-1}\right)_{\text{repère à } t_k} = M_{k-1}^k \left(\widehat{R}_{k-1|k-1}\right)_{\text{repère à } t_{k-1}} \quad (20)$$

De manière similaire, la position de la cible mobile 102 déterminée lors de l'itération précédente (k-1) peut être redéfinie dans le nouveau repère de mesure 201 selon la relation (21) :

$$\left(\widehat{x}_{k-1|k-1}\right)_{\text{repère à } t_k} = M_{k-1}^k \left( \left(\widehat{x}_{k-1|k-1}\right)_{\text{repère à } t_{k-1}} - \begin{pmatrix} o_x \\ o_y \\ o_z \end{pmatrix} \right) \quad (21)$$

Les éléments $o_x$, $o_y$, $o_z$ sont les coordonnées de l'origine du nouveau repère de mesure 201 dans le repère de mesure 201 associé à l'itération précédente.

D'autres paramètres d'état peuvent restés inchangés lors du changement du repère de mesure 201, tels que les paramètres de courbures et de torsion.

Un tel changement de repère de mesure 201 permet de manipuler des paramètres d'état et des mesures exprimés dans un même repère de mesure 201, ce qui permet une réduction de la complexité de calcul.

Les autres étapes du procédé consistent à appliquer les étapes de prédiction 402, de mesure 403 et de correction 404 en utilisant l'un des modèles dynamiques de mouvement décrits dans le premier ou dans le deuxième mode de réalisation préféré de l'invention.

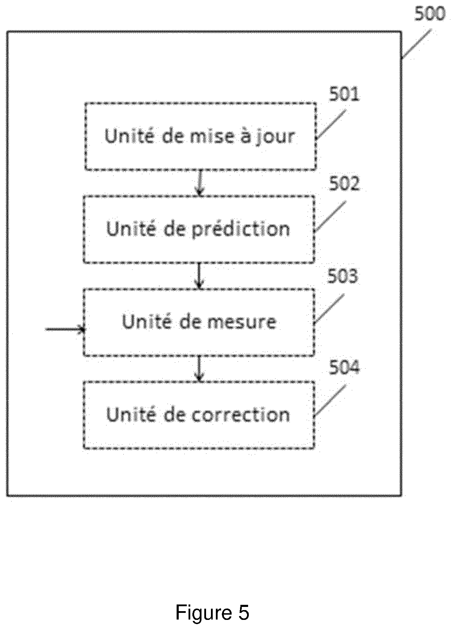

La figure 5 représente un dispositif d'estimation 500 de l'état d'une cible mobile 102 mis en œuvre dans un radar 101, fixe ou mobile, et comprenant :

- une unité de mise à jour 501 apte à définir dans un nouveau repère de mesure 201 des paramètres d'état initialement définis dans un premier repère de mesure 201 ;

- une unité de prédiction 502 apte à exécuter l'étape de prédiction d'un filtre de Kalman étendu invariant ;

- une unité de mesure 503 apte à acquérir une mesure d'au moins un des paramètres d'état de la cible mobile 102 ; et

- une unité de correction 504 apte à exécuter l'étape de correction d'un filtre de Kalman étendu invariant.

L'homme du métier comprendra que le procédé d'estimation de l'état d'une cible mobile 102 selon les modes de réalisation peut être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

L'invention n'est pas limitée aux modes de réalisation décrits ci-avant à titre d'exemple non limitatif. Elle englobe toutes les variantes de réalisation qui pourront être envisagées par l'homme du métier.

## Revendications

1. Procédé d'estimation de l'état d'une cible mobile (102), destiné à être mis en œuvre dans un radar (101), comprenant une pluralité d'itérations, chacune desdites itérations comprenant une étape d'application d'un filtre de Kalman étendu invariant et fournissant une estimation de l'état de la cible mobile (102) dans un trièdre Frenet-Serret représenté par une pluralité de paramètres d'état et une matrice d'estimation de la covariance de l'erreur, ledit filtre de Kalman étendu invariant comprenant :

   - une étape de prédiction fournissant un état estimé a priori de ladite cible mobile (102) en résolvant une ou plusieurs équations d'évolution de la pluralité de paramètres d'état représentant un modèle dynamique de mouvement ; et
   - une étape de correction fournissant un état estimé a posteriori de ladite cible mobile (102) en utilisant ledit état estimé a priori et une mesure d'au moins un desdits paramètres d'état,

   **caractérisé en ce que** ledit modèle dynamique de mouvement de ladite cible mobile (102) converge, après un nombre fini d'itérations, vers un mouvement rectiligne lorsque l'une ou plusieurs équations d'évolution de la pluralité de paramètres d'état convergent vers zéro.

2. Procédé selon la revendication 1, **caractérisé en ce que** ledit modèle dynamique de mouvement converge, après un nombre fini d'itérations, vers un mouvement rectiligne uniforme.

3. Procédé selon la revendication 1 ou 2, **caractérisé en ce que** ledit modèle dynamique de mouvement converge, après un nombre fini d'itérations, vers un mouvement dans un plan horizontal associé à une altitude constante par rapport au sol.

4. Procédé selon l'une quelconque des revendications précédentes, **caractérisé en ce que** ladite cible mobile (102) se déplace dans un espace à trois dimensions (3D), ladite pluralité de paramètres d'état comprenant :

   - une matrice d'orientation ;
   - un paramètre de courbure ;
   - un paramètre de torsion ;
   - une norme de vecteur vitesse ; et

- une position instantanée.

5. Procédé selon la revendication 4, **caractérisé en ce que** l'évolution temporelle dudit paramètre de courbure et l'évolution temporelle dudit paramètre de torsion suivent une loi exponentielle décroissante impactée par un bruit additif.

6. Procédé selon l'une quelconque des revendications précédentes, **caractérisé en ce que** la cible mobile (102) se déplace dans un plan à deux dimensions (2D), ladite pluralité de paramètres d'état comprenant :

   - un angle définissant le cap de la cible mobile (102) ;
   - un paramètre de courbure ;
   - une norme de vecteur vitesse ; et
   - une position instantanée.

7. Procédé selon l'une quelconque des revendications précédentes, **caractérisé en ce que** ledit radar (101) opère selon un mode de fonctionnement actif, une mesure active acquise par ledit radar (101) permettant de déterminer un ou plusieurs des paramètres de position suivants :

   - la distance séparant ledit radar (101) de ladite cible mobile (102) ;
   - la vitesse relative du mouvement de ladite cible mobile 102 par rapport audit radar (101) ; et
   - la direction de ladite cible mobile (102) définie par un angle d'élévation et un angle d'azimut.

8. Procédé selon l'une des revendications 1 à 6, **caractérisé en ce que** ledit radar (101) opère selon un mode de fonctionnement passif, une mesure passive acquise par ledit radar (101) permettant de déterminer au moins la direction de la cible mobile (102) définie par un angle d'élévation et un angle d'azimut.

9. Procédé selon l'une des revendications 1 à 6, **caractérisé en ce que** ledit radar (101) alterne son fonctionnement entre un mode de fonctionnement actif et un mode de fonctionnement passif.

10. Procédé selon l'une quelconque des revendications précédentes, **caractérisé en ce que** ledit radar (101) est fixe par rapport au sol.

11. Procédé selon les revendications 1 à 9, **caractérisé en ce que** ledit radar (101) est mobile par rapport au sol, chacune desdites itérations comprenant une étape de mise à jour des paramètres d'état comprenant les sous-étapes consistant à :

   - recevoir ladite pluralité de paramètres d'état déterminés lors d'une itération précédente ;
   - définir un nouveau repère de mesure (201) associé à la position instantanée du radar (101) ;
   - redéfinir ladite pluralité de paramètres d'état reçus dans le nouveau repère de mesure (201).

12. Système d'estimation de l'état d'une cible mobile (102), **caractérisé en ce qu'**il comprend un dispositif d'estimation (500) configuré pour mettre en œuvre le procédé selon l'une des revendications 1 à 11.

Figure 1

Figure 2

Figure 3

Figure 4

500

501

Unité de mise à jour

502

Unité de prédiction

503

Unité de mesure

504

Unité de correction

Figure 5

# EP 3 992 666 A1

Europäisches
Patentamt

European
Patent Office

Office européen
des brevets

**RAPPORT DE RECHERCHE EUROPEENNE**

Numéro de la demande

**EP 21 20 4090**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | PILTÉ MARION ET AL: "Fully adaptive update rate for non-linear trackers", IET RADAR SONAR NAVIGATION, THE INSTITUTION OF ENGINEERING AND TECHNOLOGY, UK, vol. 12, no. 12, 1 décembre 2018 (2018-12-01), pages 1419-1428, XP006070898, ISSN: 1751-8784, DOI: 10.1049/IET-RSN.2018.5252 | 1-4,6-12 | INV. G01S13/72 |
| A | * le document en entier * | 5 | |
| | ----- | | |
| A | ATTAL YOANN ET AL: "LPI target tracking involving IEKF", 2019 INTERNATIONAL RADAR CONFERENCE (RADAR), IEEE, 23 septembre 2019 (2019-09-23), pages 1-4, XP033764224, DOI: 10.1109/RADAR41533.2019.171315 * le document en entier * | 3,6,8,9,11 | |
| | ----- | | DOMAINES TECHNIQUES RECHERCHES (IPC) |
| A | PILTE MARION ET AL: "Tracking the Frenet-Serret frame associated to a highly maneuvering target in 3D", 2017 IEEE 56TH ANNUAL CONFERENCE ON DECISION AND CONTROL (CDC), IEEE, 12 décembre 2017 (2017-12-12), pages 1969-1974, XP033304106, DOI: 10.1109/CDC.2017.8263937 * le document en entier * | 1-12 | G01S |
| | ----- | | |
| | -/-- | | |

Le présent rapport a été établi pour toutes les revendications

| Lieu de la recherche | Date d'achèvement de la recherche | Examinateur |
|---|---|---|
| Munich | 17 mars 2022 | Rudolf, Hans |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

page 1 de 2

Europäisches
Patentamt

European
Patent Office

Office européen
des brevets

**RAPPORT DE RECHERCHE EUROPEENNE**

Numéro de la demande

**EP 21 20 4090**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | PILTÉ MARION ET AL: "Drone Tracking Using an Innovative UKF", 24 octobre 2017 (2017-10-24), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 301 - 3, XP047452273, ISBN: 978-3-642-17318-9 [extrait le 2017-10-24] * le document en entier * ----- | 1-12 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 17 mars 2022 | Rudolf, Hans |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**RÉFÉRENCES CITÉES DANS LA DESCRIPTION**

**Documents brevets cités dans la description**

- FR 2018
- FR 1911227